# EUROPÄISCHE PATENTSCHRIFT

(11) **EP 1 396 442 B1**
(45) Veröffentlichungstag und Bekanntmachung des Hinweises auf die Patenterteilung: **17.06.2009**
(21) Anmeldenummer: 03019166.2
(22) Anmeldetag: 25.08.2003
(51) Int. Cl.: B65D 43/16, B65D 43/20, B42F 7/14, B42F 17/02, G11B 33/04

(54) **Box zur Aufnahme plattenförmiger Gegenstände**
Box for the receipt of flat items
Boîte pour la réception d'objets plats

(30) Priorität: 02.09.2002 DE 20213455 U
(43) Veröffentlichungstag der Anmeldung: 10.03.2004
(73) Patentinhaber: HAN-Bürogeräte GmbH & Co. KG, Zentralverwaltung, 32051 Herford (DE)
(72) Erfinder: Niehaus, Ralf, 33739 Bielefeld (DE)
(74) Vertreter: König, Norbert

(56) Entgegenhaltungen:
- DE-A1- 3 917 166
- DE-U1- 8 232 181
- US-A- 2 503 611
- US-A- 4 420 079
- US-A- 5 411 134

## Beschreibung

Die Erfindung betrifft eine Box zur Aufnahme plattenförmiger Gegenstände, wie Karteikarten, CDs, DVDs, Disketten etc. gemäß Oberbegriff des Anspruchs 1.

Es sind eine Vielzahl derartiger Boxen bekannt, wie z.B. aus DE-A-3917166, die sämtlich den Nachteil haben, dass der geöffnete Deckel störend im Raum steht und teilweise auch nicht ausreichend weit genug geöffnet werden kann.

Die Aufgabe der vorliegenden Erfindung besteht deshalb darin, eine Box der eingangs genannten Art so auszubilden, dass der Deckel maximal weit geöffnet werden kann und dabei in eine Position bewegbar ist, in der der Deckel praktisch keinen Raum mehr benötigt.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Durch die erfindungsgemäße Ausbildung ist es möglich, den Deckel in eine erste Offenstellung, in der der Deckel über 90° hinaus verschwenkt ist, in eine zweite Offenstellung, in der der Deckel um 180° geschwenkt ist, und in eine dritte Position zu bewegen, in der das untere Teil der Box in den Deckel hineingeschoben ist. In der letzteren Position des Deckels bzw. des Unterteils der Box benötigt der Deckel praktisch keinen Raum mehr.

Die Erfindung soll nachfolgend anhand der beigefügten Zeichnung, in der ein Ausführungsbeispiel dargestellt ist, näher erläutert werden.

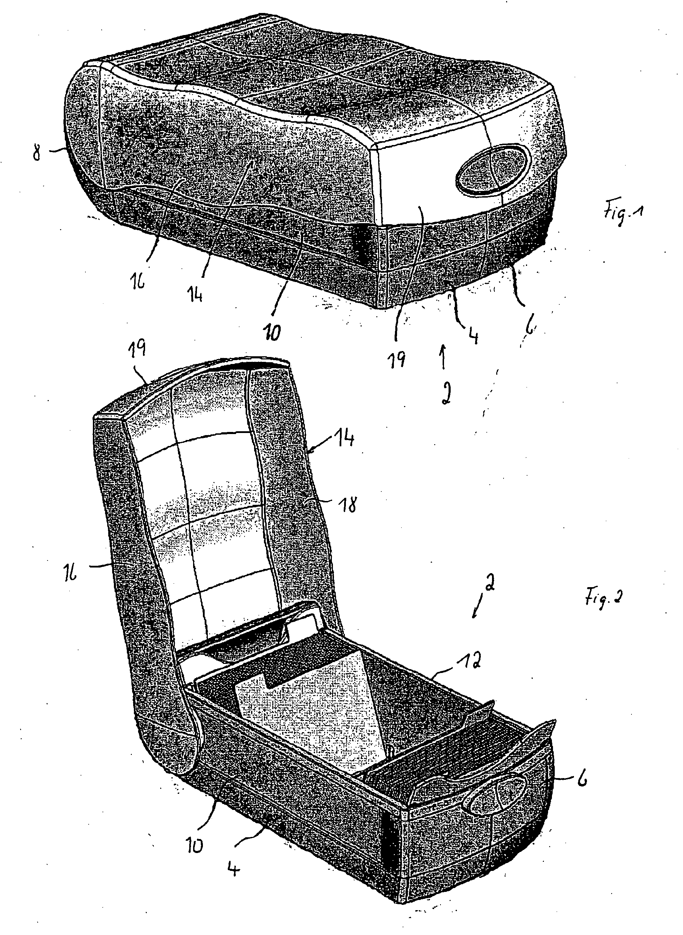

Es zeigt
- Fig. 1: eine perspektivische Abbildung einer Box mit geschlossenem Deckel,
- Fig. 2: die Box nach Fig. 1 mit einem etwa senkrecht nach oben verschwenkten Deckel,
- Fig. 3: die Box nach Fig. 1 mit einem um etwa 180° verschwenkten Deckel,
- Fig. 4: die Box nach Fig. 1 - eingeschoben in den Deckel,
- Fig. 5: die Box nach Fig. 1 ohne Deckel mit Achsstummeln und Rastknöpfen,
- Fig. 6: den vom Box-Unterteil gelösten Deckel mit Achsaufnahmen,
- Fig. 7: eine Achsaufnahme des Deckels im Detail und
- Fig. 8-10: Positionen der Rastknöpfe des Boxenunterteiles relativ zu im Deckel ausgebildeten Rastrippen in verschiedenen Deckel-Offenstellungen.

Gleiche Bauteile in den Figuren der Zeichnung sind mit den gleichen Bezugszeichen versehen.

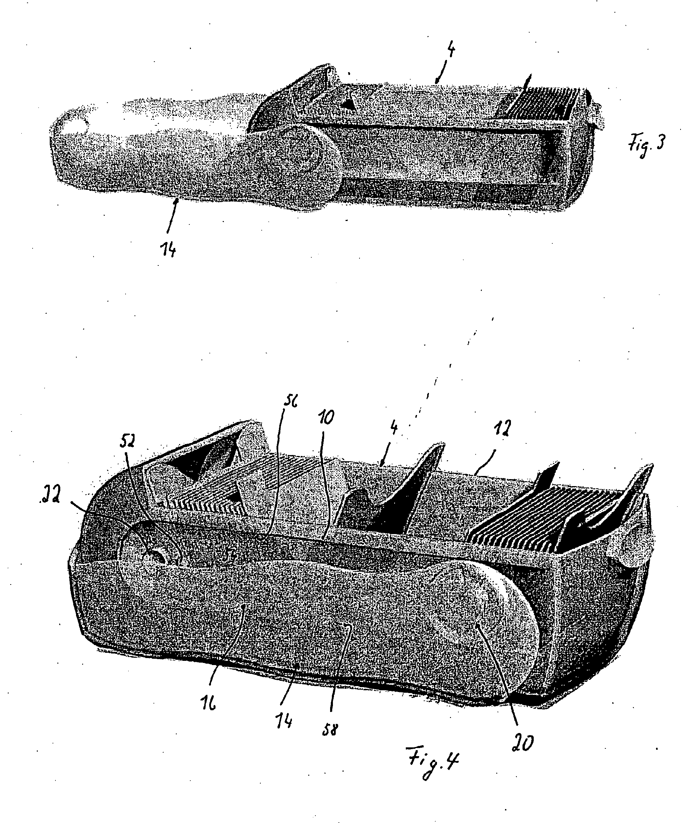

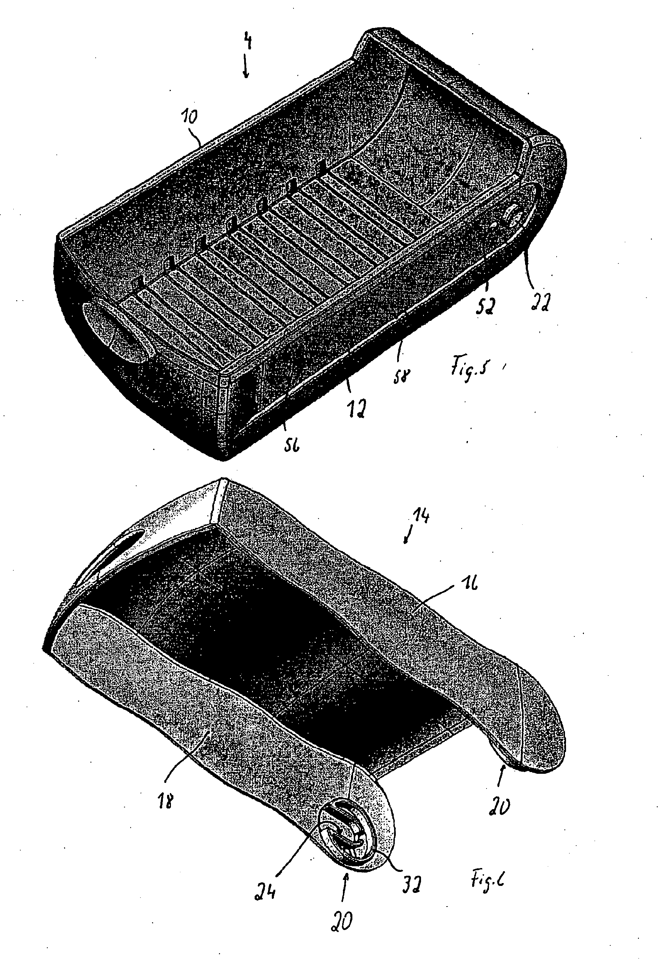

Die Zeichnung zeigt eine Box 2 für plattenförmige Gegenstände, wie Karteikarten, CDs, DVDs, Disketten o. Ä. Die Box umfasst ein kastenförmiges Unterteil 4 mit einer Vorderwand 6, einer Rückwand 8 und Seitenwänden 10, 12 sowie einen schwenkbar mit dem Unterteil verbundenen Deckel 14, der die Seitenwände 10, 12 und die Vorderwand 6 des Unterteils 4 übergreifende Deckelränder 16, 18, 19 aufweist. Im rückwärtigen Bereich der seitlichen Deckelränder 16, 18 sind nach innen vorstehende Achsaufnahmen 20 für am Unterteil 4 in dessen rückwärtigen Bereich der Seitenwände 10, 12 angeordnete Achsstummel 22 vorgesehen, vgl. Fig. 3-10.

Die Achsaufnahme 20 umfasst eine U-förmige,. zum vorderen Ende des Deckels 14 hin offene Führung 24 für die Achsstummel 22. Die Führung 24 weist gerade parallele U-Schenkel 26, 28 und einen halbkreisförmigen U-Steg 30 auf. Der U-Steg 30 ist beabstandet und konzentrisch von einer kreisförmigen Wand 32 umgeben, die an den Enden 34, 36 der U-Schenkel endet und mit diesen verbunden ist, derart, dass zwischen der U-förmigen Führung 24 und der kreisförmigen Wand 32 eine teilkreisförmige Kulissenführung 38 gebildet ist.

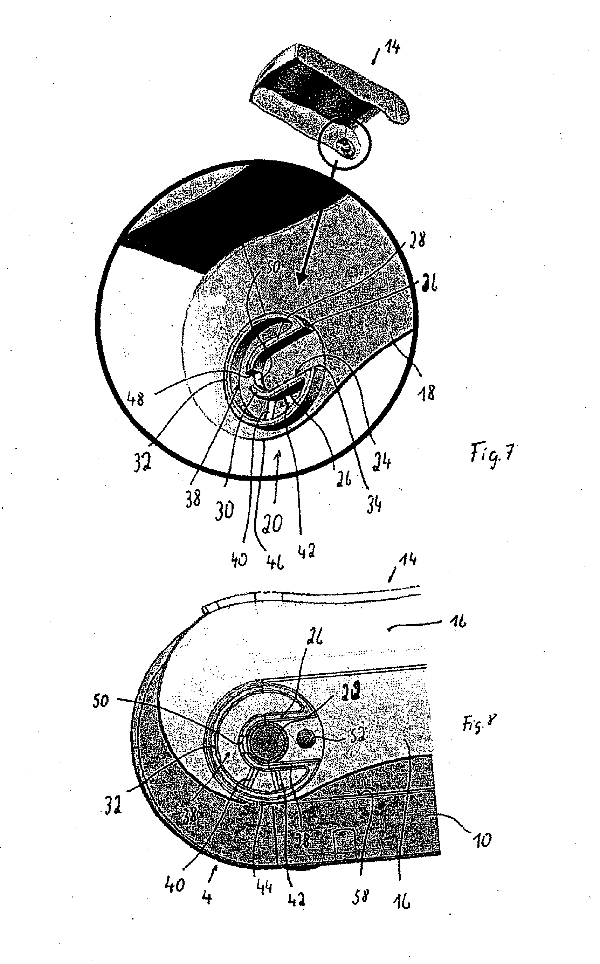

In der Kulissenführung 38 sind zwei radial verlaufende, die kreisförmige Wand 32 und die U-förmige Führung 24 verbindende Rastrippen 40, 42 ausgebildet. Diese Rastrippen 40, 42 sind in dem Teil der Kulissenführung 38 angeordnet, der den freien Enden 44, 46 des Deckelrandes 16, 18 zugeordnet ist. Die Rastrippen verlaufen im geschlossenen Zustand des Deckels nach unten, vgl. Fig. 8.

Der halbkreisförmige U-Steg 30 weist mittig eine Ausnehmung 48 unter Belastung eines Raststeges 50 auf.

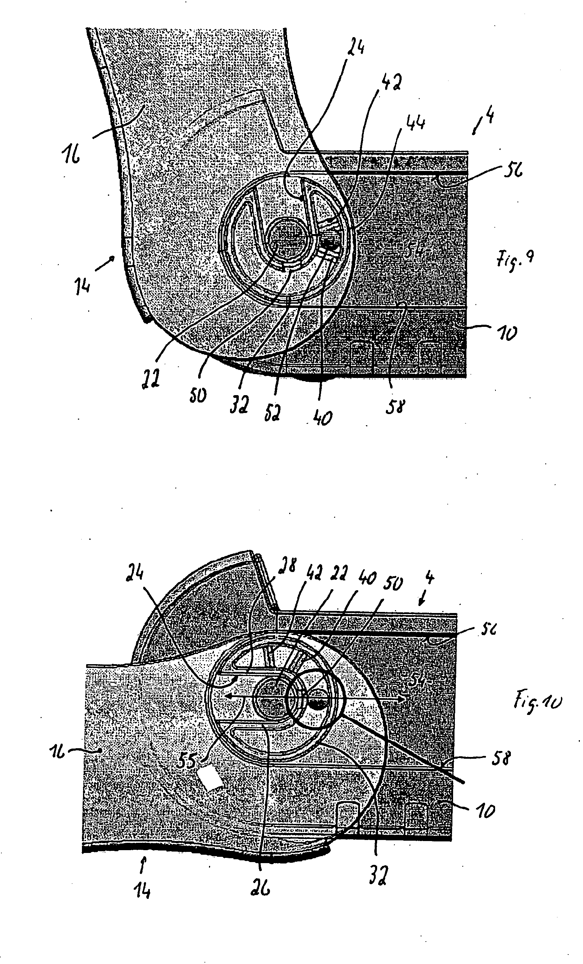

Das Unterteil 4 der Box 2 weist in Bezug zum vorderen Ende der Box vor den beiden Achsstummeln 22 jeweils einen der Kulissenführung 38 des Deckels zugeordneten Rastknopf 52 auf, vgl. Fig. 4, 5, 8-10. Der Abstand zwischen dem Rastknopf und dem Achsstummel entspricht in etwa der Stärke der Wandung der U-förmigen Führung 24. Der Durchmesser des Rastknopfes 52 entspricht etwa der Breite der Ausnehmung 48 im U-Steg 30 der U-förmigen Führung 24. Die Ausbildung ist dabei derart, dass zum Einschieben des Unterteils 4 in den Deckel 14 der Box 2 in der 180°-Offenposition des Deckels der Rastknopf 52 über den Raststeg 50 hinwegschiebbar ist, vgl. Fig. 10. Die Achsstummel 22 und Rastknöpfe 52 befinden sich in einer entlang den Seitenwänden 10, 12 des Unterteils 4 ausgebildeten Vertiefung 54, die als Führung für die Achsaufnahme 20 beim Hineinschieben des Unterteils 4 in den Deckel 14 vorgesehen ist, vgl. Fig. 3 und 4. Der Abstand zwischen den längsverlaufenden Wänden 56, 58 der Vertiefung 54 entspricht dem Durchmesser der kreisförmigen Wand 32. Das Maß der Vertiefung ist etwa gleich der Höhe der Wand 32 und der Höhe der Achsstummel und der Rastknöpfe.

Die Fig. 8 zeigt den hinteren Teil der Box 2 mit geschlossenem Deckel 14. In dieser Position befinden sich der Achsstummel 22 und der Rastknopf 52 in der U-förmigen Führung 24 des Deckels. Durch Verschwenken des Deckels nach oben verschiebt sich der in der Zeichnung untere U-Schenkel 28 über den Rastknopf 52 hinweg, bis der Rastknopf in die Kulissenführung 38 gelangt.

Die Fig. 9 zeigt die geöffnete Box mit nach oben weisendem Deckel. In dieser Position befindet sich der Rastknopf 52 zwischen den beiden Rastrippen 40, 42 und fixiert dadurch den Deckel in dieser Stellung.

Die Fig. 10 zeigt den Deckel in der 180°-Offenstellung. In dieser Stellung liegt der Rastknopf 52 vor der Ausnehmung 48 des halbkreisförmigen U-Steges 30 der U-förmigen Führung 24 und vor dem Raststeg 50. Aus dieser Position heraus kann das Unterteil 4 der Box in den Deckel 14 hineingeschoben werden, indem der Rastknopf 52 über den Raststeg 50 hinweg und durch die Ausnehmung 48 hindurch in die U-förmige Führung 24 hineingeschoben wird, siehe Pfeil 55. Aus dieser Position kann dann das Unterteil leicht in den Deckel hineingeschoben werden, wobei die Achsaufnahmen 20 mit der kreisförmigen Wand 32 in den Vertiefungen 54 durch deren Wände 56, 58 geführt werden.

Das Unterteil 4 der Box 2 weist vorzugsweise eine etwa kreisförmig gebogene über die Seitenwände nach oben gezogene Rückwand 8 auf. Der Deckel 14 ist vorzugsweise rückseitig offen ausgebildet.

Die Box 2 besteht vorzugsweise aus Kunststoff, insbesondere einem tranzluzenten Kunststoff.

## Patentansprüche

1. Box für plattenförmige Gegenstände, wie Karteikarten, CDs, DVDs, Disketten mit einem mit einer Vorderwand, einer Rückwand und Seitenwänden versehenen kastenförmigen Unterteil und einem schwenkbar mit dem Unterteil versehenen Deckel, welcher die Seitenwände des Unterteils übergreifende Deckelränder aufweist, in deren rückwärtigen Bereich Achsaufnahmen (20) für am Unterteil der Box in dessen rückwärtigem Bereich der Seitenwände ausgebildete Achsstummel vorgesehen sind, **gekennzeichnet durch** folgende Merkmale:
- Die Achsaufnahme (20) umfasst eine U-förmige, zum vorderen Ende des Deckels (14) hin offene Führung (24) für den Achsstummel (22);
- die U-förmige Führung (24) weist gerade, parallele U-Schenkel (26) und (28) und einen halbkreisförmigen U-Steg (30) auf;
- der U-Steg (30) ist beabstandet und konzentrisch von einer kreisförmigen Wand (32) umgeben, die an den Enden (34, 36) der U-Schenkel (26, 28) endet und mit diesen verbunden ist, derart, dass zwischen der U-förmigen Führung (24) und der kreisförmigen Wand (32) eine teilringförmige Kulissenführung (38) gebildet ist;
- in der Kulissenführung (38) sind zwei radial verlaufende, die kreisförmige Wand (32) und die U-förmige Führung (24) verbindende Rastrippen (40, 42) mit Abstand zueinander ausgebildet;
- die Rastrippen (40, 42) sind in dem Teil der Kulissenführung (38) angeordnet, der den freien Enden (44, 46) des Deckelrandes (16, 18) zugewandt ist, und verlaufen im geschlossenen Zustand des Deckels nach unten;
- der halbkreisförmige U-Steg (30) weist mittig eine Ausnehmung (48) unter Belassung eines Raststeges (50) auf;
- das Unterteil (4) der Box (2) weist in Bezug zum vorderen Ende der Box vor den beiden Achsstummeln (22) jeweils einen der Kulissenführung (38) des Deckels zugeordneten Rastknopf (52) auf, dessen Abstand zum Achsstummel etwa der Stärke der Wandung der U-förmigen Führung (24) entspricht und dessen Durchmesser etwa der Breite der Ausnehmung (48) des U-Steges (30) der U-förmigen Führung (24) entspricht, wobei die Ausbildung derart ist, dass zum Einschieben des Unterteils (4) der Box (2) in den Deckel in der 180°-Öffnungsposition des Deckels (14) der Rastknopf (52) über den Raststeg (50) hinweg in die U-förmige Führung (24) schiebbar ist.

2. Box nach Anspruch 1, **dadurch gekennzeichnet, dass** die Achsaufnahmen (20) nach innen vorstehen.

3. Box nach einem der vorhergehenden Ansprüche, **dadurch gekennzeichnet, dass** die Achsstummel (22) und die Rastknöpfe (52) in entlang den Seitenwänden (10, 12) des Unterteils (4) der Box (2) ausgebildeten Führungen (54) für die Achsaufnahmen (20) angeordnet sind.

4. Box nach Anspruch 3, **dadurch gekennzeichnet, dass** die Führungen (54) in den Seitenwänden (10, 12) ausgebildete Vertiefungen sind.

5. Box nach Anspruch 1, **dadurch gekennzeichnet, dass** das Unterteil (4) der Box (2) eine kreisförmig gebogene Rückwand (8) aufweist.

6. Box nach Anspruch 5, **dadurch gekennzeichnet dass** die Rückwand (8) höher ausgebildet ist als die/Seitenwände (10, 12) der Box.

7. Box nach einem der vorhergehenden Ansprüche, **dadurch gekennzeichnet, dass** der Deckel (14) rückseitig offen ausgebildet ist.

8. Box nach einem der vorhergehenden Ansprüche, **dadurch gekennzeichnet, dass** sie aus Kunststoff, insbesondere tranzluzentem Kunststoff besteht.

## Claims

1. Box for lamellar objects such as file cards, CD's, DVD's and diskettes, said box having a cassette-shaped lower part provided with a front wall, a rear wall and side walls, and a cover which is provided with the lower part in a swivellable manner and which has edges of said cover which overlap the side walls of the lower part and in the rearward region of which there are provided axle receptacles (20) for axle stubs constructed on the lower part of the box in the rearward region of the side walls of said box, **characterised by** the following features:
- the axle receptacle (20) comprises a U-shaped guide (24) for the axle stub (22), which guide is open towards the front end of the cover (14);
- the U-shaped guide (24) has straight, parallel arms (26) and (28) and a semicircular bridge (30) ;
- the bridge (30) of the U is surrounded, at a distance and concentrically, by a circular wall (32), which terminates at the ends (34, 36) of the arms (26, 28) of the U and is connected to said arms, in such a way that a slot guide (38) in the form of part of a ring is formed between the U-shaped guide (24) and the circular wall (32) ;
- constructed in the slot guide (38) at a distance from one another are two radially extending latching ribs (40, 42) which connect the circular wall (32) and the U-shaped guide (24);
- the latching ribs (40, 42) are arranged in that part of the slot guide (38) which faces towards the free ends (44, 46) of the edge (16, 18) of the cover, and extend downwards when the cover is in the closed condition;
- the semicircular bridge (30) of the U has a clearance (48) in the middle, leaving a latching ridge (50);
- in front, with respect to the front end of the box, of each of the two axle stubs (22), the lower part (4) of said box (2) has a latching knob (52) which is associated with the slot guide (38) on the cover and the distance of which from the axle stub approximately corresponds to the thickness of the wall of the U-shaped guide (24) and the diameter of which approximately corresponds to the width of the clearance (48) in the bridge (30) of the U-shaped guide (24), the construction being such that, for the purpose of pushing the lower part (4) of the box (2) into the cover when said cover (14) is in the 180° open position, the latching knob (52) can be pushed over the latching ridge (50) into the U-shaped guide (24).

2. Box according to claim 1,
**characterised in that**
the axle receptacles (20) project inwards.

3. Box according to one of the preceding claims,
**characterised in that**
the axle stubs (22) and the latching knobs (52) are arranged in guides (54) for the axle receptacles (20), which guides are constructed along the side walls (10, 12) of the lower part (4) of the box (2).

4. Box according to claim 3,
**characterised in that**
the guides (54) are depressions constructed in the side walls (10, 12).

5. Box according to claim 1,
**characterised in that**
the lower part (4) of the box (2) has a circularly curved rear wall (8).

6. Box according to claim 5,
**characterised in that**
the rear wall (8) is constructed so as to be higher than the side walls (10, 12) of the box.

7. Box according to one of the preceding claims,
**characterised in that**
the cover (14) is of open construction on the rear side.

8. Box according to one of the preceding claims,
**characterised in that**
it consists of plastic, in particular translucent plastic.

## Revendications

1. Boîte pour objets en forme de plaque, comme des fiches, des cédéroms, des DVD, des disquettes, comprenant une partie inférieure en forme de caisse, munie d'une paroi avant, d'une paroi arrière et de parois latérales, et un couvercle relié à la partie inférieure de façon pivotante, ledit couvercle présentant des bords de couvercle chevauchant les parois latérales de la partie inférieure et dans la zone arrière desquels des logements d'axe (20) sont prévus pour des tourillons réalisés sur la partie inférieure de la boîte dans la zone arrière des parois latérales,
**caractérisée par** les particularités suivantes :
- le logement d'axe (20) comprend une glissière (24) en forme de U, ouverte vers l'extrémité avant du couvercle (14), pour le tourillon (22) ;
- la glissière en forme de U (24) présente des branches de U droites, parallèles, (26) et (28), et un dos de U semi-circulaire (30) ;
- le dos de U (30) est espacé et entouré de façon concentrique par une paroi circulaire (32) qui se termine aux extrémités (34, 36) des branches de U (26, 28) et est relié à celles-ci, de telle sorte qu'entre la glissière en forme de U (24) et la paroi circulaire (32), un guide de glissière (38) de forme partiellement annulaire est réalisé ;
- dans le guide de glissière (38), deux nervures d'arrêt (40, 42) s'étendant radialement et reliant la paroi circulaire (32) et la glissière en forme de U (24) sont réalisées avec un espacement entre elles ;
- les nervures d'arrêt (40, 42) sont disposées dans la partie du guide de glissière (38) qui est tournée vers les extrémités libres (44, 46) du bord de couvercle (16, 18) et s'étendent vers le bas à l'état fermé du couvercle ;
- le dos de U semi-circulaire (30) présente au centre un évidement (48) en réservant une barrette d'arrêt (50) ;
- la partie inférieure (4) de la boîte (2) présente, par rapport à l'extrémité avant de la boîte, avant les deux tourillons (22), respectivement un bouton d'arrêt (52) destiné à coopérer avec le guide de glissière (38) du couvercle et dont l'espacement par rapport au tourillon correspond approximativement à l'épaisseur de la paroi de la glissière en forme de U (24) et dont le diamètre correspond approximativement à la largeur de l'évidement (48) du dos de U (30) de la glissière en forme de U (24), dans laquelle la réalisation est telle que pour l'insertion de la partie inférieure (4) de la boîte (2) dans le couvercle dans la position d'ouverture à 180° du couvercle (14), le bouton d'arrêt (52) peut être amené à gisser au-delà de la nervure d'arrêt (50) dans la glissière en forme de U (24).

2. Boîte selon la revendication 1, **caractérisée en ce que** les logements d'axe (20) font saillie vers l'intérieur.

3. Boîte selon l'une quelconque des revendications précédentes, **caractérisée en ce que** les tourillons (22) et les boutons d'arrêt (52) sont disposés dans des coulisses (54) pour les logements d'axe (20), réalisées le long des parois latérales (10, 12) de la partie inférieure (4) de la boîte (2).

4. Boîte selon la revendication 3, **caractérisée en ce que** les coulisses (54) sont des enfoncements réalisés dans les parois latérales (10, 12).

5. Boîte selon la revendication 1, **caractérisée en ce que** la partie inférieure (4) de la boîte (2) présente une paroi arrière (8) à courbure circulaire.

6. Boîte selon la revendication 5, **caractérisée en ce que** la paroi arrière (8) est réalisée plus haute que les parois latérales (10, 12) de la boîte.

7. Boîte selon l'une quelconque des revendications précédentes, **caractérisée en ce que** le couvercle (14) est réalisé avec une ouverture à l'arrière.

8. Boîte selon l'une quelconque des revendications précédentes, **caractérisée en ce qu'**elle est composée de matière plastique, en particulier de matière plastique translucide.
